# EUROPEAN PATENT SPECIFICATION

(11) **EP 1 487 889 B1**
(45) Date of publication and mention of the grant of the patent: **23.01.2008**
(21) Application number: 03745037.6
(22) Date of filing: 27.03.2003
(51) Int. Cl.: C08F 283/00, C08G 18/67, C09D 175/16, C03C 25/32

(54) **CURABLE LIQUID RESIN COMPOSITION**
HÄRTBARE FLÜSSIGE HARZZUSAMMENSETZUNG
COMPOSITION DE RESINE LIQUIDE DURCISSABLE

(30) Priority: 27.03.2002 JP 2002088363
(43) Date of publication of application: 22.12.2004
(73) Proprietor: DSM IP Assets B.V., 6411 TE Heerlen (NL); JSR Corporation, Tokyo 104-8410 (JP)
(72) Inventor: SUGIMOTO, Masanobu, 2-11-24, Tsukiji, Tokyo 104-8410 (JP); SUGIMOTO, Hideki, 2-11-24, Tsukiji, Tokyo 104-8410 (JP); SIGEMOTO, Takeo, 2-11-24, Tsukiji, Tokyo 104-8410 (JP); KOMIYA, Zen, 2-11-24, Tsukiji, Tokyo 104-8410 (JP); UKACHI, Takashi, 2-11-24, Tsukiji, Tokyo 104-8410 (JP)
(74) Representative: van Loon, C.J.J.
(86) International application number: PCT/NL2003/000231
(87) International publication number: WO 2003/080690

(56) References cited:
- EP-A- 0 656 378
- WO-A-00/11097
- WO-A-01/47824

## Description

### Field of the Invention

The present invention relates to a curable liquid resin composition. More particularly, the present invention relates to a curable liquid resin composition which provides an optical fiber coating material which rarely allows residual stress to remain.

### Prior Art

In the manufacture of optical fiber, a resin coating is applied to a molten glass fiber for protection and reinforcement immediately after spinning. As the resin coating, a structure in which a flexible primary coating layer is provided on the surface of the optical fiber and a rigid secondary coating layer is provided over the primary coating layer has been known. When subjecting the optical fiber provided with the resin coating to practical application, a ribbon structure having a rectangular cross section is formed by arranging a number of optical fibers, for example four or eight , for example side by side in a plane, and securing the optical fibers using a bundling material, or an optical fiber ribbon is formed by binding the ribbon structures using a bundling material. A resin composition for forming the primary coating layer is called a primary material, a resin composition for forming the secondary coating layer is called a secondary material, and a material for forming the ribbon structure by binding the optical fibers and a bundling material used for the ribbon structure is called a ribbon matrix material. Properties required for the curable resin composition used as the coating material for optical fibers include: being liquid at room temperature and having low viscosity which ensures excellent applicability; exhibiting good productivity due to a high cure speed; the cured product of the composition having sufficient strength and flexibility; the cured product exhibiting little physical change over a wide range of temperature change; the cured product having superior heat resistance and hydrolysis resistance; the cured product showing superior long-term reliability due to little physical change over time; the cured product exhibiting superior resistance to chemicals such as acids and alkalis; the cured product having low hygroscopicity and water absorption; the cured product exhibiting superior light resistance; the cured product exhibiting high oil resistance; the cured product producing only a small amount of hydrogen gas which adversely affects the optical fibers; and the like.

WO 01 47824 A discloses a coated optical fiber comprising an outer cured coated layer formed from liquid curable resin composition. The composition comprises:
- (a) urethane (meth)acrylate obtained from reaction of diisocyanate compound, hydroxyl group containing (meth)acrylate compound and/or polyol compound,
- (b) (meth)acrylate compound and
- (c) polymerization initiator.
Cured coating has modulus of elasticity of 50 MPa or more at 23°C.

WO 00 11097 discloses an adhesive comprising urethane (meth)acrylate comprising a backbone, urethane and (meth)acrylate; hydroxy (meth)acrylate where the hydroxyl and acrylate are separated by at least 3 carbons; and photoinitiator(s).

The secondary material and the ribbon matrix material are designed to have a high Young's modulus in order to protect the primary material in the lower layer or glass. However, this makes it difficult to allow the stress to be relieved. In more detail, if a high thermal stress tends to remain during the cooling process at the time of manufacture, load will be applied to the primary material or glass, thereby causing a transmission loss. A coating material which allows stress to be released to only a small extent involves residual stress or allows a large amount of stress to be transmitted to the primary material in the lower layer or glass when heat or deformation is applied to the optical fiber, thereby causing transmission loss.

### Problems to be Solved by the Invention

In view of the above situation, an object of the present invention is to provide a curable liquid resin composition suitable for the secondary material and/or for the ribbon matrix material showing good stress relaxation while maintaining properties as the optical fiber coating material.

### Means for Solving the Problems

The present inventors have conducted extensive studies on the composition of a curable liquid resin composition. As a result, the present inventors have found that a curable liquid resin composition which produces a cured product excelling in stress relaxation in comparison with a conventional cured product can be obtained by mixing a urethane (meth)acrylate, a polymerizable monomer, and a photoinitiator at a specific ratio, whereby the cured product has a relatively low glass transition temperature in combination with a relatively high stress relief rate. This finding has led to the completion of the present invention, being a curable liquid resin composition comprising:
(a) 5-94 parts by weight of a urethane (meth)acrylate comprising a polyether backbone, at least one urethane group and at least one (meth)acrylate end group;
(b) 5-95 parts by weight of a polymerizable monomer, and;
(c) 0.01-10 parts by weight of a photoinitiator, in 100 parts by weight of the curable liquid resin composition,
wherein the cured product of the composition has a glass transition temperature between 30 and 85 °C and a stress relaxation time of 30 minutes or less.

### Detailed Description of the Invention

The urethane (meth)acrylate (a) in the invention comprises at least one urethane group, preferably at least two urethane groups. More preferably the urethane (meth)acrylate (a) comprises between 4 and 8 urethane groups, most preferably between 4 and 6.

The urethane (meth)acrylate (a) in the invention comprises at least one (meth)acrylate end group. Preferably the urethane (meth)acrylate (a) comprises on average at least 1.2 (meth)acrylate end groups, even more preferably at least 1.8. Preferably the urethane (meth)acrylate (a) comprises less than 4.2 (meth)acrylate end groups, even more preferably less than 3.2.

The urethane (meth)acrylate (a) in the present invention may be produced by reacting a polyether based polyol (a-1), responsible for the polyether backbone, with an isocyanato (meth)acrylate. Alternatively, the urethane (meth)acrylate (a) may be produced by reacting at least:
(a-1) a polyether based polyol;
(a-2) a diisocyanate, and;
(a-3) a hydroxyl group-containing (meth)acrylate.
In the last reaction, the urethane (meth)acrylate is produced by reacting isocyanate groups of a diisocyanate with hydroxyl groups of a polyether based polyol and a hydroxyl group-containing (meth)acrylate. As the reaction method, a method of reacting a polyether based polyol, diisocyanate, and hydroxyl group-containing (meth)acrylate all together; a method of reacting a polyether based polyol with a diisocyanate, and reacting the resulting product with a hydroxyl group-containing (meth)acrylate; a method of reacting a diisocyanate with a hydroxyl group-containing (meth)acrylate, and reacting the resulting product with a polyether based polyol; a method of reacting a diisocyanate with a hydroxyl group-containing (meth)acrylate, reacting the resulting product with a polyether based polyol, and reacting the resulting product with a hydroxyl group-containing (meth)acrylate; and the like can be given.

As suitable polyether based polyol (a-1) used for producing the component (a) any polyether based polyol may be used. Examples of suitable polyether based polyols are polytetrahydrofuran, polypropylene glycol, copolymers of ethylene propyleneglycol, copolymers of ethylene butyleneglycol and alkyl-substituted polytetrahydrofuran. Preferably, the polyol (a-1) has 2-4 OH-functional groups, more preferably 2-3 OH-functional groups and most preferably the polyol (a-1) is a diol. The polyether polyol (a-1) may have a number average molecular weight of between 300-10000. Preferably the polyether polyol (a-1) comprises an alkyl side chain. Preferably, the alkyl side chain contains 1 to 5 carbon atoms. It has surprisingly been found that the presence of such a side chain can have a beneficial effect on the stress relaxation properties of the liquid coating composition when cured. Even more preferably the alkyl side group is a methyl or an ethyl side group.

In a preferred embodiment of the invention a polyether diol is used having a number average molecular weight of 300-10000 comprising repeating alkyl units containing 2 to 6 carbon atoms, wherein at least part of these alkyl units contain an alkyl side chain of 1 to 5 carbon atoms.

Examples of suitable diols (a-1) having an alkyl side chain are polypropylene glycol, methyl-substituted polytetrahydrofuran and a copolymer diol of ethylene oxide and butylene oxide. As examples of suitable commercially available diols PPG700, PPG1000, PPG2000 (manufactured by Asahi Glass Co., Ltd.), PTG-L1000, PTG-L2000 (manufactured by Mitsui), EOBO1000 and EOBO2000 (manufactured by Dai-ichi Kogyo Seiyaky Co., Ltd.) can be given.

In one embodiment of the invention the polyol (a-1) may include a structure shown by the formula (1);

-CH₂CH(CₓH₂ₓ₊₁)- (1)

wherein X is an integer from 1-5.

As examples of the structure shown by the formula (1) of the polyol (a-1) used in the present invention, a propylene group (-CH₂CH(CH₃)-), 1,2-butylene group (-CH₂CH(C₂H₅)-), 1,2-pentylene group (-CH₂CH(C₃H₇)-), 1,2-hexylene group (-CH₂CH(C₄H₉)-), and 1,2-heptylene group (-CH₂CH(C₅H₁₁)-) can be given. Of these, a propylene group and a butylene group are preferable.

In another embodiment of the invention the polyol both includes a structure according to formula (1) and a structure shown by the formula (2) or an alicyclic structure. 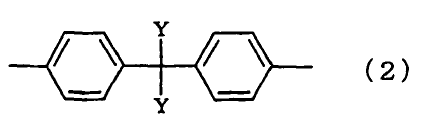 wherein Y can be an alkyl side group, comprising 1-5 C-atoms. Preferably, Y represents a methyl or an ethyl group.

As examples of a group having an alicyclic structure, linkage groups having a 3-7 membered alicyclic structure such as a divalent linkage group having a cyclic structure selected from a cyclopropane ring, cyclobutane ring, cyclopentane ring, cyclohexane ring, and cycloheptane ring can be given. Of these, a divalent linkage group having a cyclohexane ring is preferable.

In yet another embodiment of the invention, the polyol includes a structure according to formula (1), a structure according to formula (2) and an alicyclic structure.

There are no specific limitations to the polyol (a-1) used in the present invention. As examples of the polyether polyol (a-1), polyether diols such as an alicyclic polyether diol and an aromatic polyether diol can be given. These diols may be used either individually or in combination of two or more. There are no specific limitations to the manner of polymerization of each structural unit of these diols. Any of random polymerization, block polymerization, and graft polymerization may be employed.

As examples of the alicyclic polyether diol, an alkylene oxide addition diol of a diol having an alicyclic structure and having the structure shown by the formula (1) such as an alkylene oxide addition diol of hydrogenated bisphenol A, alkylene oxide addition diol of hydrogenated bisphenol F, and alkylene oxide addition diol of 1,4-cyclohexanediol can be given.

As examples of the aromatic polyether diol, an aromatic polyether diol having the structure shown by the formula (1) such as alkylene oxide addition diol of bisphenol A and alkylene oxide addition diol of bisphenol F can be given.

The aromatic polyether diol is commercially available as Uniol DAB400, DAB800, DAB1000, DAB2000, DB400, DB800, DB1000, DB2000 (manufactured by NOF Corporation), and the like.

The polyether based polyol (a-1) may be used in combination with other polyols. As examples of other polyols used in combination, ethylene oxide addition diol of bisphenol A, and the like can be given. As commercially available products of these diols, DA400, DA700, DA1000, DA1500, DA2000, DA4000 (manufactured by NOF Corporation) and the like can be given.

As examples of the diisocyanate (a-2) used in the present invention, an aromatic diisocyanate, alicyclic diisocyanate, aliphatic diisocyanate, and the like can be given. As examples of the aromatic diisocyanate, 2,4-tolylene diisocyanate, 2,6-tolylene diisocyanate, 1,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, bis(2-isocyanateethyl)fumarate, 6-isopropyl-1,3-phenyl diisocyanate, 4-diphenylpropane diisocyanate, tetramethylxylylene diisocyanate, and the like can be given. As examples of the alicyclic diisocyanate, isophorone diisocyanate, methylenebis(4-cyclohexylisocyanate), hydrogenated diphenylmethane diisocyanate, hydrogenated xylylene diisocyanate, 2,5-bis(isocyanatemethyl)-bicyclo[2.2.1]heptane, 2,6-bis(isocyanatemethyl)-bicyclo[2.2.1]heptane, and the like can be given. As examples of the aliphatic diisocyanate, 1,6-hexane diisocyanate, 2,2,4-trimethylhexamethylene diisocyanate, lysine diisocyanate, and the like can be given. Of these, 2,4-tolylene diisocyanate and isophorone diisocyanate are particularly preferable. The diisocyanate may be used either individually or in combination of two or more.

As the hydroxyl group-containing (meth)acrylate (a-3) used in the present invention, a hydroxyl group-containing (meth)acrylate in which a hydroxyl group is bonded to the primary carbon atom (hereinafter called "primary hydroxyl group-containing (meth)acrylate") and a hydroxyl group-containing (meth)acrylate in which a hydroxyl group is bonded to the secondary carbon atom (hereinafter called "secondary hydroxyl group-containing (meth)acrylate") are preferable. Use of a hydroxyl group-containing (meth)acrylate in which a hydroxyl group is bonded to the tertiary carbon atom (hereinafter called "tertiary hydroxyl group-containing (meth)acrylate") is not preferable, since the tertiary hydroxyl group-containing (meth)acrylate has inferior reactivity with an isocyanate group.

Examples of the primary hydroxyl group-containing (meth)acrylate include 2-hydroxyethyl (meth)acrylate, 4-hydroxybutyl (meth)acrylate, 1,6-hexanediol mono(meth)acrylate, pentaerythritol tri(meth)acrylate, dipentaerythritol penta(meth)acrylate, neopentyl glycol mono(meth)acrylate, trimethylolpropane di(meth)acrylate, trimethylolethane di(meth)acrylate, and (meth)acrylate shown by the following formula (3):

CH₂=C(R¹)-COOCH₂CH₂-(OCOCH₂CH₂CH₂CH₂CH₂)ₙ-OH (3)

wherein R¹ represents a hydrogen atom or a methyl group and n is an integer of 1-3.

As examples of the secondary hydroxyl group-containing (meth)acrylate, 2-hydroxypropyl (meth)acrylate, 2-hydroxybutyl (meth)acrylate, 2-hydroxy-3-phenyloxypropyl (meth)acrylate, 4-hydroxycyclohexyl (meth)acrylate, a compound obtained by an addition reaction of (meth)acrylic acid and a glycidyl group-containing compound such as alkyl glycidyl ether, allyl glycidyl ether, and glycidyl (meth)acrylate, and the like can be given.

In the synthesis of the component (a) of the present invention, a urethanization catalyst selected from copper naphthenate, cobalt naphthenate, zinc naphthenate, dibutyltin dilaurate, triethylamine, 1,4-diazabicyclo[2.2.2]octane, and 2,6,7-trimethyl-1,4-diazabicyclo[2.2.2]octane is preferably used in an amount of 0.01-1 wt% of the total amount of reactants. The reaction temperature is usually 5-90°C, and preferably 10-80°C.

The polystyrene-reduced number average molecular weight of the urethane (meth)acrylate (a) used in the present invention measured by gel permeation chromatography is 300-10,000, and preferably 400-7,000. If the molecular weight is less than 300, the resulting cured product may have low breaking elongation. If the molecular weight is exceeds 10,000, viscosity of the resulting curable liquid resin composition may be increased.

The urethane (meth)acrylate (a) is usually present in an amount of 5-94 parts by weight for 100 parts by weight of the composition. Preferably the urethane (meth)acrylate (a) is used in an amount of 5-85 parts by weight, and particularly preferably 10-80 parts by weight for 100 parts by weight of the curable liquid resin composition. If the amount is less than 5 parts by weight, elongation of the resulting cured product may be low. If the amount exceeds 94 parts by weight, viscosity of the resulting curable liquid resin composition may be increased.

In the present invention, in addition to the above urethane (meth)acrylate using the diol, a urethane (meth)acrylate having a different structure may be used in combination.

For example, a urethane (meth)acrylate obtained by reacting one mol of a diisocyanate with two mol of a hydroxyl group-containing (meth)acrylate compound may be added. As examples of such a urethane (meth)acrylate, a reaction product of hydroxyethyl (meth)acrylate and 2,5-(or 2,6-)bis(isocyanatemethyl)-bicyclo[2.2.1]heptane, a reaction product of hydroxyethyl (meth)acrylate and 2,4-tolylene diisocyanate, a reaction product of hydroxyethyl (meth)acrylate and isophorone diisocyanate, a reaction product of hydroxypropyl (meth)acrylate and 2,4-tolylene diisocyanate, a reaction product of hydroxypropyl (meth)acrylate and isophorone diisocyanate, and the like can be given.

The polymerizable monomer which is the component (b) of the present invention is selected from polymerizable monofunctional vinyl monomers, polymerizable polyfunctional monomers, and the like.

As examples of the polymerizable monofunctional vinyl monomer, vinyl group-containing lactams such as N-vinylpyrrolidone and N-vinylcaprolactam, alicyclic structure-containing (meth)acrylates such as isobornyl (meth)acrylate, bornyl (meth)acrylate, tricyclodecanyl (meth)acrylate, dicyclopentanyl (meth)acrylate, dicyclopentenyl (meth)acrylate, and cyclohexyl (meth)acrylate, benzyl (meth)acrylate, 4-butylcyclohexyl (meth)acrylate, acryloylmorpholine, vinylimidazole, vinylpyridine, and the like can be given. Further examples include 2-hydroxyethyl (meth)acrylate, 2-hydroxypropyl (meth)acrylate, 2-hydroxy-3-phenoxypropyl acrylate, 2-hydroxybutyl (meth)acrylate, methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxydiethylene glycol (meth)acrylate, benzyl (meth)acrylate, phenoxyethyl (meth)acrylate, polyethylene glycol mono(meth)acrylate, polypropylene glycol mono(meth)acrylate, methoxyethylene glycol (meth)acrylate, ethoxyethyl (meth)acrylate, methoxy polyethylene glycol (meth)acrylate, methoxy polypropylene glycol (meth)acrylate, diacetone (meth)acrylamide, isobutoxymethyl (meth)acrylamide, N,N-dimethyl (meth)acrylamide, t-octyl (meth)acrylamide, dimethylaminoethyl (meth)acrylate, diethylaminoethyl (meth)acrylate, 7-amino-3,7-dimethyloctyl (meth)acrylate, N,N-diethyl (meth)acrylamide, N,N-dimethylaminopropyl (meth)acrylamide, hydroxybutyl vinyl ether, lauryl vinyl ether, cetyl vinyl ether, 2-ethylhexyl vinyl ether, and compounds shown by the following formulas (4) to (6):

CH₂=C(R²)-COO(R³O)ₛ-R⁴ (4)

wherein R² represents a hydrogen atom or a methyl group, R³ represents an alkylene group having 2-6, and preferably 2-4 carbon atoms, R⁴ represents a hydrogen atom or an alkyl group having 1-12, and preferably 1-9 carbon atoms, and s is an integer of 0-12, and preferably 1-8; 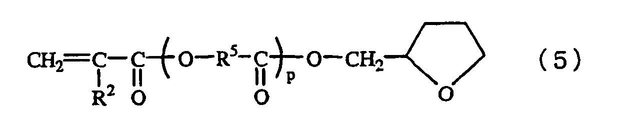 wherein R² represents a hydrogen atom or methyl group, R⁵ represents an alkylene group having 2-8, and preferably 2-5 carbon atoms, and p is an integer of 0-8, and preferably 1-4; 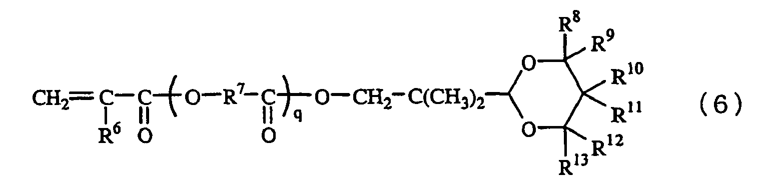 wherein R⁶ represents a hydrogen atom or a methyl group, R⁷ represents an alkylene group having 2-8, and preferably 2-5 carbon atoms, R⁸ to R¹³ individually represent a hydrogen atom or a methyl group, and q is an integer of 0-8, and preferably 1-4.

As commercially available products of the polymerizable monofunctional monomers, Aronix M-111, M-113, M-114, M-117 (manufactured by Toagosei Co., Ltd.), Kayarad TC110S, R629, R644 (manufactured by Nippon Kayaku Co., Ltd.), Viscoat 3700, Viscoat #320, Lauryl Acrylate (manufactured by Osaka Organic Chemical Industry Co., Ltd.), and the like can be given.

As examples of the polymerizable polyfunctional monomer, trimethylolpropane tri(meth)acrylate, pentaerythritol tri(meth)acrylate, ethylene glycol di(meth)acrylate, tetraethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, neopentyl glycol hydroxypivalate, trimethylolpropanetrioxyethyl (meth)acrylate, tris(2-hydroxyethyl)isocyanurate tri(meth)acrylate, tris(2-hydroxyethyl)isocyanurate di(meth)acrylate, tricyclodecanediyldimethane di(meth)acrylate, di(meth)acrylate of diol of ethylene oxide or propylene oxide adduct of bisphenol A, di(meth)acrylate of diol of ethylene oxide or propylene oxide adduct of hydrogenated bisphenol A, epoxy(meth)acrylate obtained by the addition of (meth)acrylate to diglycidyl ether of bisphenol A, triethylene glycol divinyl ether, and the like can be given.

As commercially available products of the polymerizable polyfunctional monomer, Yupimer UV SA1002, SA2007 (manufactured by Mitsubishi Chemical Corp.), Viscoat 700 (manufactured by Osaka Organic Chemical Industry, Ltd.), Ripoxy VR-77 (manufactured by Showa Highpolymer Co., Ltd.), Kayarad R-604, DPCA-20, DPCA-30, DPCA-60, DPCA-120, HX-620, D-310, D-330 (manufactured by Nippon Kayaku Co., Ltd.), Aronix M-210, M-215, M-315, M-325 (manufactured by Toagosei Co., Ltd.), and the like can be given. Of these, Ripoxy VR-77, Kayarad MANDA, and Viscoat 700 are preferable.

The polymerizable monomer (b) is usually present in an amount of 5-94 parts by weight for 100 parts by weight of the composition. Preferably the polymerizable monomer (b) is used in an amount of 5-85 parts by weight, and particularly preferably 10-80 parts by weight for 100 parts by weight of the composition. If the amount is less than 5 parts by weight, applicability of the composition may be decreased since the viscosity of the composition becomes too high. If the amount exceeds 94 parts by weight, toughness of the resulting cured product may be decreased.

The curable liquid resin composition of the present invention may be cured by applying radiation using a photoinitiator. Curing by irradiation and curing by heating may be used in combination. Radiation used herein refers to infrared rays, visible rays, ultraviolet rays, X-rays, electron beams, α-rays, β-rays, γ-rays, and the like. Preferably UV-visible rays are used.

In the case of curing the curable liquid resin composition of the present invention by irradiation, a photoinitiator (c) is used. As examples of the photoinitiator, 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl methyl ketal, 1-(4-isopropylphenyl)-2-hydroxy-2-methylpropan-1-one, 2-hydroxy-2-methyl-1-phenylpropan-1-one, thioxanethone, diethylthioxanthone, 2-isopropylthioxanthone, 2-chlorothioxanthone, 2-methyl-1-[4-(methylthio)phenyl]-2-morpholino-propan-1-one, 2,4,6-trimethylbenzoyl diphenylphosphine oxide, bis-(2,6-dimethoxybenzoyl)-2,4,4-trimethylpentylphosphine oxide and the like can be given. As commercially available products of the photoinitiator (c) Irgacure 184, 369, 651, 500, 907, CGI 1700, CGI 1750, CGI 1850, CG24-61 (manufactured by Ciba Specialty Chemicals Inc.); Lucirin LR8728 (manufactured by BASF); Darocure 1116, 1173 (manufactured by Merck), Ubecryl P36 (manufactured by UCB), and the like can be given. The photoinitiator (c) is preferably used in an amount of 0.1-10 parts by weight, and particularly preferably 0.5-7 parts by weight for 100 parts by weight of the composition.

In combination with the photoinitiator, if necessary, it is preferable to use a photosensitizer. As examples of suitable photosensitizers, triethylamine, diethylamine, N-methyldiethanoleamine, ethanolamine, 4-dimethylaminobenzoic acid, 4-methyl dimethylaminobenzoate, 4-ethyl dimethylaminobenzoate, 4-isoamyl dimethylaminobenzoate and the like can be given. As commercially available products of the photosensitizer Ubecryl P102, 103, 104, 105 (manufactured by UCB); and the like can be given.

In the case of curing the curable liquid resin composition of the present invention by using heat and radiation, a heat polymerization initiator may be used in combination with the photoinitiator. A suitable heat polymerization initiator, for example, a peroxide or an azo compound may be used. As specific examples of the heat polymerization initiator, benzoyl peroxide, t-butyloxybenzoate, azobisisobutyronitrile, and the like can be given.

Curable oligomers or polymers, reactive dilutents, or other additives other than the above components may optionally be added to the curable liquid resin composition of the present invention insofar as the characteristics of the curable liquid resin composition are not impaired.

As examples of other curable oligomers or polymers, polyester (meth)acrylate, epoxy (meth)acrylate, polyamide (meth)acrylate, a siloxane polymer having a (meth)acryloyloxy group, a reactive polymer obtained by reacting acrylic acid and a copolymer of glycidyl methacrylate and other vinyl monomers, and the like can be given.

Various additives such as antioxidants, coloring agents, UV absorbers, light stabilizers, silane coupling agents, heat polymerization inhibitors, leveling agents, surfactants, preservatives, plasticizers, lubricants, solvents, fillers, aging preventives, and wettability improvers may optionally be added in addition to the above components. As examples of antioxidants, Irganox 1010, 1035, 1076, 1222 (manufactured by Ciba Specialty Chemicals Inc.), Antigene P, 3C, FR, GA-80 (manufactured by Sumitomo Chemical Co., Ltd.) and the like can be given. As examples of UV absorbers, Tinuvin P, 234, 320, 326, 327, 328, 329, 213 (manufactured by Ciba Specialty Chemicals Inc.), Seesorb 102, 103, 501, 202, 712, 704 (manufactured by Shipro Kasei K.K.), and the like can be given. As examples of light stabilizers, Tinuvin 292, 144, 622LD (manufactured by Ciba Specialty Chemicals Inc.), Sanol LS770 (manufactured by Sankyo Co., Ltd.), Sumisorb TM-061, 110 (manufactured by Sumitomo Chemical Co., Ltd.), and the like can be given. As examples of silane coupling agents, γ-aminopropyltriethoxysilane, γ-mercaptopropyltrimethoxysilane, γ-(meth)acryloxypropyltrimethoxysilane, commercially available products such as SH6062, 6030 (manufactured by Toray-Dow Corning Silicone Co., Ltd.), KBE903, 603, 403 (manufactured by Shin-Etsu Chemical Co., Ltd.), and the like can be given.

The glass transition temperature of the cured product of the curable liquid resin composition of the present invention is preferably 85°C or less, still more preferably 80°C or less, and particularly preferably 75°C or less. The inventors have found that the glass transition temperature of the cured product of the curable liquid resin composition exceeds 85°C, high thermal stress may remain during cooling at the time of production. In the case where the cured product is applied as a coating material for optical fiber, the residual stress may cause transmission loss due to the load applied to a primary material and glass. The glass transition temperature of the cured product is generally higher than room temperature. Preferably the glass transition temperature of the cured product is higher than 30 °C, more preferably higher than 40 °C, and most preferably higher than 50 °C. The glass transition temperature is measured as a peak temperature of a loss tangent by dynamic viscoelasticity measurement of the cured film.

The stress relaxation time of the cured product of the curable liquid resin composition of the present invention is preferably 30 minutes or less, still more preferably 20 minutes or less, and particularly preferably 10 minutes or less. Most preferably the stress relaxation time of the cured product is 5 minutes or less. For specific compositions even a stress relaxation time below 1 minute can be reached. The inventors have found that if the stress relaxation time of the cured product of the curable liquid resin composition exceeds 30 minutes, a coating material which releases only a small amount of stress involves residual stress when heat or deformation is applied to an optical fiber or transmits a large amount of stress to a primary material in a lower layer or glass, resulting in transmission loss. The stress relaxation time is measured by a time at which the stress applied to the cured film drawn to 6% at a temperature of 23°C and a relative humidity of 50% at a rate of 1000 mm/min. by using an uniaxial drawing machine is reduced to 37% of the initial stress.

The curable liquid resin composition according to the invention is suitable for secondary coatings on optical fibers. The Young's modulus of the cured resin composition of the invention generally lies between 400 to 1,500 MPa to ensure the right mechanical properties and protect the primary coating on the optical fiber. Preferably the Young's modulus of the cured resin composition of the invention lies between 500-1,200 MPa, even more preferably between 600 - 1,000 MPa. The Young's modulus is measured by subjecting a strip of cured film (6 * 25 mm) to a tensile test at a temperature of 23°C and a humidity of 50% with a tensile rate of 1 mm/min. and a strain of 2.5%.

### Examples

The present invention is described below in more detail by examples. However, the present invention is not limited to these examples. In the examples, part means part by weight.

### Example 1

A reaction vessel equipped with a stirrer was charged with 17.2 parts of 2,4-tolylene diisocyanate, 0.015 part of 2,6-di-t-butyl-p-cresol, 0.05 part of dibutyltin dilaurate, and 0.005 part of phenothiazine. The mixture was cooled with ice to 10°C or less while stirring. 11.4 parts of hydroxyethyl acrylate was added dropwise while controlling the temperature at 20°C or less. After the addition, the mixture was allowed to react for one hour while stirring. After the addition of 29.2 parts of propylene oxide addition diol of bisphenol A with a number average molecular weight of 800 (manufactured by NOF Corporation) and 5.1 parts of ethylene oxide addition diol of bisphenol A with a number average molecular weight of 400 (manufactured by NOF Corporation), the mixture was stirred at 70-75°C for three hours. The reaction was terminated when the residual isocyanate content was 0.1 wt% or less. After the addition of 12.6 parts of isobornyl acrylate, 8.7 parts of vinylcaprolactam, 12.6 parts of Viscoat #320 (manufactured by Osaka Organic Chemical Industry Co., Ltd.), 2.9 parts of Irgacure 184 (manufactured by Ciba Specialty Chemicals Inc.), and 0.3 part of Irganox 1035 (manufactured by Ciba Specialty Chemicals Inc.), the mixture was homogeneously stirred to obtain a curable liquid resin composition of the present invention.

### Example 2

A reaction vessel equipped with a stirrer was charged with 18.1 parts of 2,4-tolylene diisocyanate, 0.015 part of 2,6-di-t-butyl-p-cresol, 0.05 part of dibutyltin dilaurate, and 0.005 part of phenothiazine. The mixture was cooled with ice to 10°C or less while stirring. 18.1 parts of hydroxyethyl acrylate was added dropwise while controlling the temperature at 20°C or less. After the addition, the mixture was allowed to react for one hour while stirring. After the addition of 27.5 parts of propylene oxide diol with a number average molecular weight of 700 (manufactured by Asahi Glass Co., Ltd.) and 5.1 parts of ethylene oxide and propylene oxide addition diol of bisphenol A with a number average molecular weight of 400 (manufactured by NOF Corporation), the mixture was stirred at 70-75°C for three hours. The reaction was terminated when the residual isocyanate content was 0.1 wt% or less. After the addition of 12.6 parts of isobornyl acrylate, 8.7 parts of vinylcaprolactam, 12.6 parts of Viscoat #320 (manufactured by Osaka Organic Chemical Industry Co., Ltd.), 2.9 parts of Irgacure 184 (manufactured by Ciba Specialty Chemicals Inc.), and 0.3 part of Irganox 1035 (manufactured by Ciba Specialty Chemicals Inc.), the mixture was homogeneously stirred to obtain a curable liquid resin composition of the present invention.

### Example 3

A reaction vessel equipped with a stirrer was charged with 17.3 parts of 2,4-tolylene diisocyanate, 0.015 part of 2,6-di-t-butyl-p-cresol, 0.05 part of dibutyltin dilaurate, and 0.005 part of phenothiazine. The mixture was cooled with ice to 10°C or less while stirring. 14.7 parts of hydroxyethyl acrylate was added dropwise while controlling the temperature at 20°C or less. After the addition, the mixture was allowed to react for one hour while stirring. After the addition of 28.9 parts of propylene oxide addition diol of bisphenol A with a number average molecular weight of 800 (manufactured by NOF Corporation), the mixture was stirred at 70-75°C for three hours. The reaction was terminated when the residual isocyanate content was 0.1 wt% or less. After the addition of 7.7 parts of isobornyl acrylate, 8.6 parts of vinylcaprolactam, 13.9 parts of Viscoat #320 (manufactured by Osaka Organic Chemical Industry Co., Ltd.), 5.7 parts of Viscoat #700 (manufactured by Osaka Organic Chemical Industry Co., Ltd.), 2.9 parts of Irgacure 184 (manufactured by Ciba Specialty Chemicals Inc.), and 0.3 part of Irganox 1035 (manufactured by Ciba Specialty Chemicals Inc.), the mixture was homogeneously stirred to obtain a curable liquid resin composition of the present invention.

### Example 4

A reaction vessel equipped with a stirrer was charged with 15.5 parts of 2,4-tolylene diisocyanate, 0.015 part of 2,6-di-t-butyl-p-cresol, 0.05 part of dibutyltin dilaurate, and 0.005 part of phenothiazine. The mixture was cooled with ice to 10°C or less while stirring. 10.4 parts of hydroxyethyl acrylate was added dropwise while controlling the temperature at 20°C or less. After the addition, the mixture was allowed to react for one hour while stirring. After the addition of 31.8 parts of a copolymer of ethylene oxide and butylene oxide with a number average molecular weight of 1000 (manufactured by Asahi Glass Co., Ltd.) and 5.1 parts of ethylene oxide and propylene oxide addition diol of bisphenol A with a number average molecular weight of 400 (manufactured by NOF Corporation), the mixture was stirred at 70-75°C for three hours. The reaction was terminated when the residual isocyanate content was 0.1 wt% or less. After the addition of 12.6 parts of isobornyl acrylate, 8.7 parts of vinylcaprolactam, 12.6 parts of Viscoat #320 (manufactured by Osaka Organic Chemical Industry Co., Ltd.), 2.9 parts of Irgacure 184 (manufactured by Ciba Specialty Chemicals Inc.), and 0.3 part of Irganox 1035 (manufactured by Ciba Specialty Chemicals Inc.), the mixture was homogeneously stirred to obtain a curable liquid resin composition of the present invention.

### Example 5

### Synthesis of UA-1

To two moles of isophorone diisocyanate (IPDI) one mole of copolymer of ethylene oxide and butylenes oxide (number average molecular weight = 2300 produced by Dai-Ichi Kogyo Seiyaku Co. Ltd.) was added. By using dibutyl tin dilaurate as a catalyst, urethane reaction was carried out at 60 °C. After completion of the reaction, two moles of hydroxyl ethyl acrylate were added to the mixture. The reaction was completed by heating the mixture to 60 °C whilst stirring. The resultant urethane acrylate is called UA-1.

### Synthesis of UA-2

To two moles of IPDI one mole of propylene oxide adduct of hydrogenated bisphenol-A (average molecular weight = 430) was added. By using dibutyl tin dilaurate as a catalyst, urethane reaction was carried out at 60 °C. After completion of the reaction, two moles of hydroxyl ethyl acrylate was added to the mixture. The reaction was completed by heating and stirring the mixture at 60 °C. The resultant urethane acrylate is called UA-2.

### Synthesis of UA-3

To one mole of IPDI, two moles of hydroxyl ethyl acrylate was added in the presence of dibutyl tin dilaurate as a catalyst. The resultant urethane acrylate is called UA-3.

A UV curable composition was prepared by mixing urethane acrylates, monomers, photo initiators, and additives as indicated in Table 1. Mixing was done at 60°C for two hours.

**Table 1**

| Component | Amount (wt %) |
|---|---|
| UA-1 | 30.4 |
| UA-2 | 15.2 |
| UA-3 | 11.3 |
| Isobornyl acrylate | 13.1 |
| GX-8345¹⁾ | 19.3 |
| SA1002 ²⁾ | 2.0 |
| Vinyl pyrrolidone | 9.8 |
| Irganox 1035 | 0.3 |
| Irgacure 184 | 3.0 |

| | |
|---|---|
| 1) Diacrylate of ethylene oxide adduct of hydrogenated bisphenol-A. Number of ethylene oxide is two moles for each side. Supplied by Dai-Ichi Kogyo Seiyaku Co. Ltd. 2) Yupimer UV SA1002 (Mitsubishi Chemical Ltd) | |

### Comparative Experiment A

A reaction vessel equipped with a stirrer was charged with 13.25 parts of 2,4-tolylene diisocyanate, 0.015 part of 2,6-di-t-butyl-p-cresol, 0.05 part of dibutyltin dilaurate, and 0.005 part of phenothiazine. The mixture was cooled with ice to 10°C or less while stirring. 11.8 parts of hydroxyethyl acrylate was added dropwise while controlling the temperature at 20°C or less. After the addition, the mixture was allowed to react for one hour while stirring. After the addition of 31.8 parts of polytetramethylene glycol with a number average molecular weight of 2000, and 4.6 parts of ethylene oxide addition diol of bisphenol A with a number average molecular weight of 400 (manufactured by NOF Corporation), the mixture was stirred at 70-75°C for three hours. The reaction was terminated when the residual isocyanate content was 0.1 wt% or less. After the addition of 7.7 parts of isobornyl acrylate, 8.8 parts of vinylcaprolactam, 7.0 parts of Viscoat #700 (manufactured by Osaka Organic Chemical Industry Co., Ltd.), 16.2 parts of Yupimer UV SA1002 (manufactured by Mitsubishi Chemical Corp.), 2.9 parts of Irgacure 184 (manufactured by Ciba Specialty Chemicals Inc.), and 0.3 part of Irganox 1035 (manufactured by Ciba Specialty Chemicals Inc.), the mixture was homogeneously stirred to obtain a curable liquid resin composition.

### Evaluation method:

A cured film used for measurement of the Young's modulus, the glass transition temperature, and the stress relief rate was prepared according to the following method.

### Preparation of test film:

The curable liquid resin composition was applied to a glass plate by using an applicator bar for a thickness of 250 µm. The curable liquid resin composition was cured by irradiation of ultraviolet rays at a dose of 1 J/cm² in air to obtain a test film.

### Measurement of Young's modulus:

The cured film was formed in the shape of a strip with a width of 6 mm and a length of 25 mm using a measurement device (manufactured by Shimadzu Corporation) to prepare a sample. The sample was subjected to a tensile test at a temperature of 23°C and a humidity of 50%. The Young's modulus was calculated from the tensile strength at a tensile rate of 1 mm/min. and a strain of 2.5%.

### Measurement of glass transition temperature:

The glass transition temperature was measured at a number of applied vibrations of 35 Hz and a temperature rising rate of 2°C/min. using a measurement instrument manufactured by A&D Co., Ltd. The peak temperature of the loss tangent obtained was taken as the glass transition temperature.

### Measurement of stress relaxation time:

A film sample of the same shape as the sample used in the measurement of the Young's modulus was held at a temperature of 23°C and a relative humidity of 50% at a tensile rate of 1000 mm/min. so that the strain was 6% using a measurement device manufactured by Shimadzu Corporation. The stress attenuated from the initial stress was measured. The period of time at which the stress is reduced to 37% of the initial stress was calculated.

### Measurement of effect of residual stress of fiber:

If residual stress is present in the coating material when drawing optical fiber, the optical fiber is unstable against heat and a phenomenon in which the dimensions are reduced during heating is observed. Therefore, the residual stress was taken as the effect of residual strain.

Preparation of optical fiber and a method of measuring the change in dimensions when heating the fiber are given below.

### Preparation of optical fiber:

### Primary material

A reaction vessel equipped with a stirrer was charged with 6.6 parts of 2,4-tolylene diisocyanate, 0.015 part of 2,6-di-t-butyl-p-cresol, 0.48 part of dibutyltin dilaurate, 0.005 part of phenothiazine, and 16.2 parts of IBXA (manufactured by the Osaka Organic Chemical Industry, Ltd.). The mixture was cooled with ice to 10°C or less while stirring. After the addition of 2.9 parts of hydroxyethyl acrylate dropwise while controlling the temperature at 20°C or less, the mixture was allowed to react for one hour while stirring. After the addition of 50.0 parts of polytetramethylene glycol with a number average molecular weight of 2000 (manufactured by Mitsubishi Chemical Corp.), the mixture was stirred at 50-60°C for four hours. The reaction was terminated when the residual isocyanate content was 0.1 wt% or less. After the addition of 10.8 parts of isobornyl acrylate (manufactured by Rohm and Haas Japan K.K.), 4.8 parts of vinylcaprolactam, 5.6 parts of lauryl acrylate, and 0.2 part of Irganox 1035 (manufactured by Ciba Specialty Chemicals Inc.), the mixture was stirred at 40-50°C for 30 minutes. After the addition of 0.1 part of diethylamine while controlling the temperature at 30-40°C, the mixture was stirred for 30 minutes. Then, 1 part of bis-(2,6-methoxybenzoyl)-2,4,4-trimethylpentylphosphine oxide and 1 part of Darocure 1173 (manufactured by Merck) were added while controlling the temperature at 50-60°C, and the mixture was stirred until a homogeneous transparent liquid was obtained. The primary material was thus obtained.

### Fiber Drawing

The primary material was applied to a metal line and cured using optical fiber drawing equipment (manufactured by Yoshida Kogyo Co., Ltd.). The compositions of the Examples 1-5 or Comparative Experiment A were applied to the cured primary material.

The optical fiber drawing conditions were as follows. The diameter of the metal line was 125 µm. The primary coating material was applied to the metal line and cured so that the diameter of the optical fiber was 200 µm after curing. The composition of the Examples 1-5 or Comparative Experiment A was applied to the primary material thus formed so that the diameter was 250 µm after curing. As UV irradiation equipment, a UV lamp "SMX 3.5 kW" manufactured by ORC Corp. was used. Applicability was evaluated at an optical fiber drawing rate of 1000 m/min.

### Measurement of dimensional chance in optical fiber during heating

The dimensional change of the optical fiber was measured using a TMA manufactured by SEIKO Instruments Inc. at a temperature increase rate of 3°C/min. and a constant load compression of 0.3 g.

### Evaluation of test result

A composition which satisfied the following conditions in each measurement was evaluated as good.
Young's modulus: 400-1,500 MPa
Glass transition temperature: 85°C or less
Stress relaxation time: 30 minutes or less
Effect of residual stress: no monotonous decrease in dimensions after heating.
The test results of the examples and the comparative example are shown in Table 2.

**Table 2**

| Test item | Example 1 | Example 2 | Example 3 | Example 4 | Example 5 | Comparative Experiment A |
|---|---|---|---|---|---|---|
| Young's modulus (MPa) | 750 | 900 | 840 | 800 | 410 | 900 |
| Glass transition temperature (°C) | 73 | 74 | 80 | 72 | 70 | 110 |
| Stress relaxation time (min.) | 2 | 5 | 16 | 8 | 0.5 | 40 |
| Decrease in dimensions after heating | None | None | None | None | None | Decreased |
| Evaluation | Good | Good | Good | Good | Good | Bad |

As is clear from Table 2, the glass transition temperature and the stress relaxation time of the composition in Comparative Experiment A was out of the range of the present invention, whereby residual stress was present in the coating layer as shown by the decrease in dimensions after heating. Furthermore, the Young's modulus of the compositions of Examples 1 to 5 of the present invention is suitable for a secondary material and a ribbon matrix material. Moreover, the compositions of Examples 1 to 5 rarely cause stress to remain in the coating material when producing optical fiber due to a low glass transition temperature and high stress relief rate.

## Claims

1. A curable liquid resin composition comprising:
(a) 5-94 parts by weight of a urethane (meth)acrylate comprising a polyether backbone, at least one urethane group and at least one (meth)acrylate end group;
(b) 5-94 parts by weight of a polymerizable monomer, and;
(c) 0.01-10 parts by weight of a photoinitiator,
in 100 parts by weight of the curable liquid resin composition,
wherein the cured product of the composition has a glass transition temperature between 30 to 85 °C and a stress relaxation time of 30 minutes or less.

2. A curable liquid resin composition according to claim 1, wherein the glass transition temperature of the cured product of the composition is between 50 and 85 °C.

3. A curable liquid resin composition according to any one of claims 1 or 2, wherein the stress relaxation time is 10 minutes or less.

4. A curable liquid resin composition according to any one of claims 1 to 3, wherein the urethane (meth)acrylate (a) is based on at least:
(a-1) a polyether based polyol;
(a-2) a diisocyanate, and;
(a-3) a hydroxyl group-containing (meth)acrylate.

5. A curable liquid resin composition according to any one of claims 1 to 4 wherein the polyether backbone is derived from a polyether based polyol (a-1) having a number average molecular weight of 300-10000, comprising repeating alkyl units containing 2 to 6 carbon atoms, wherein at least part of these alkyl units contain an alkyl side chain of 1 to 5 carbon atoms,

6. A curable liquid resin composition according to any of claims 1-5, wherein the polyether backbone of the urethane (meth)acrylate (a) is derived from a polyether based polyol (a-1) comprising a structural unit shown by the following formula (1)
-CH₂CH(CₓH₂ₓ₊₁)- (1)
wherein x is an integer of 1-5;

7. The curable liquid resin composition according to claim 6, wherein x in the ormula (1) is either 1 or 2.

8. A curable liquid resin composition according to any one of claims 6 to 7, wherein the polyether diol (a-1) also contains a structure shown by the following formula (2) 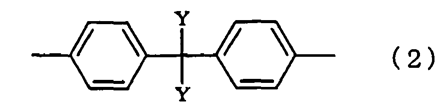 wherein Y represents a hydrogen atom or a methyl group.

9. A curable liquid resin composition according to any one of claims 6 to 8, wherein the polyether diol (a-1) also contains an alicyclic structure.

10. The curable liquid resin composition according to any one of claims 1 to 9, which is used as a secondary coating or a ribbon matrix material for optical fiber.

11. A process for producing a cured product comprising irradiating the curable liquid resin composition according to any one of claims 1 to 9.

12. A coated optical fiber comprising a cured primary coating with a modulus of less than 3 MPa at 23 °C and a cured secondary coating based on the curable liquid resin composition according to any one of claims 1 to 9.

## Patentansprüche

1. Härtbare flüssige Harzzusammensetzung, umfassend:
(a) 5 bis 94 Gewichtsteile eines Urethan(meth)acrylats, umfassend ein Polyethergerüst, mindestens eine Urethangruppe und mindestens eine (Meth)acrylatendgruppe;
(b) 5 bis 94 Gewichtsteile eines polymerisierbaren Monomers, und;
(c) 0,01 bis 10 Gewichtsteile eines Photoinitiators,
in 100 Gewichtsteilen der härtbaren flüssigen Harzzusammerisetzung, wobei das gehärtete Produkt der Zusammensetzung eine Glasübergangstemperatur zwischen 30 und 85°C und eine Spannungsrelaxationszeit von 30 Minuten oder weniger aufweist,

2. Härtbare flüssige Harzzusammensetzung gemäß Anspruch 1, wobei die Glasübergangstemperatur des gehärteten Produkts der Zusammensetzung zwischen 50 und 85°C liegt.

3. Härtbare flüssige Harzzusammensetzung gemäß einem der Ansprüche 1 oder 2, wobei die Spannungsrelaxationszeit 10 Minuten oder weniger beträgt.

4. Härtbare flüssige Harzzusammensetzung gemäß einem der Ansprüche 1 bis 3, wobei das Urethan(meth)acrylat (a) basiert auf mindestens:
(a-1) einem Polyol auf Polyetherbasis;
(a-2) einem Diisocyanat, und;
(a-3) einem Hydroxylgruppe-enthaltendem (Meth)acrylat.

5. Härtbare flüssige Harzzusammensetzung gemäß einem der Ansprüche 1 bis 4, wobei das Polyethergerüst abgeleitet ist von einem Polyol auf Polyetherbasis (a-1) mit einem Zahlenmittel des Molekulargewichts von 300 bis 10000, umfassend Alkylwiederholungseinheiten, welche 2 bis 6 Kohlenstoffatome enthalten, wobei mindestens ein Teil dieser Alkyleinheiten eine Alkylseitenkette mit 1 bis 5 Kohlenstoffatomen enthält.

6. Härtbare flüssige Harzzusammensetzung gemäß einem der Ansprüche 1 bis 5, wobei das Polyethergerüst des Urethan(meth)acrylats (a) abgeleitet ist von einem Polyol auf Polyetherbasis (a-1), umfassend eine Struktureinheit, welche durch die folgende Formel (1) gezeigt wird
-CH₂CH(CₓH₂ₓ₊₁)- (1)
wobei x eine ganze Zahl von 1 bis 5 ist.

7. Härtbare flüssige Harzzusammensetzung gemäß Anspruch 6, wobei x in der Formel (1) entweder 1 oder 2 ist.

8. Härtbare flüssige Harzzusammensetzung gemäß einem der Ansprüche 6 bis 7, wobei das Polyetherdiol (a-1) auch eine Struktur enthält, welche durch die folgende Formel (2) gezeigt wird 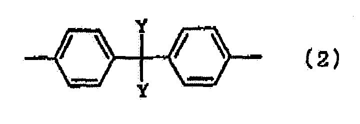 wobei Y ein Wasserstoffatom oder eine Methylgruppe darstellt.

9. Härtbare flüssige Harzzusammensetzung gemäß einem der Ansprüche 6 bis 8, wobei das Polyetherdiol (a-1) auch eine alicyclische Struktur enthält.

10. Härtbare flüssige Harzzusammensetzung gemäß einem der Ansprüche 1 bis 9, welche als ein zweites Beschichtungs- oder ein Bandmatrixmaterial für eine optische Faser verwendet wird.

11. Verfahren zur Herstellung eines gehärteten Produkts, umfassend das Bestrahlen der härtbaren flüssigen Harzzusammensetzung gemäß einem der Ansprüche 1 bis 9.

12. Beschichtete optische Faser, umfassend eine gehärtete erste Beschichtung mit einem Modul von niedriger als 3 MPa bei 23°C und eine gehärtete zweite Beschichtung, basierend auf der gehärteten flüssigen Harzzusammensetzung gemäß einem der Ansprüche 1 bis 9.

## Revendications

1. Composition de résine liquide durcissable comprenant :
(a) 5 à 94 parties en poids d'un (méth)acrylate d'uréthane comprenant un squelette polyéther, au moins un groupe uréthane et au moins un groupe final (méth)acrylate ;
(b) 5 à 94 parties en poids du monomère polymérisable, et ;
(c) 0,01 à 10 parties en poids d'un photoinitiateur,
dans 100 parties en poids de la composition de résine liquide durcissable,
dans laquelle le produit durci de la composition a une température de transition vitreuse comprise entre 30 à 85°C et un temps de relaxation de contrainte de 30 minutes ou moins.

2. Composition de résine liquide durcissable selon la revendication 1, dans laquelle la température de transition vitreuse du produit durci de la composition est comprise entre 50 et 85°C.

3. Composition de résine liquide durcissable selon l'une quelconque des revendications 1 ou 2, dans laquelle le temps de relaxation de contrainte est de 10 minutes ou moins.

4. composition de résine liquide durcissable selon l'une quelconque des revendications 1 à 3, dans laquelle le (méth)acrylate d'uréthane (a) est basé sur au moins :
(a-1) un polyol à base de polyéther ;
(a-2) un diisocyanate, et ;
(a-3) un (méth)acrylate contenant un groupe hydroxyle.

5. Composition de résine liquide durcissable selon l'une quelconque des revendications 1 à 4, dans laquelle le squelette polyéther est dérivé d'un polyol à base de polyéther (a-1) ayant un poids moléculaire moyen en nombre de 300 à 10000, comprenant des motifs alkyle répétés contenant 2 à 6 atomes de carbone, dans laquelle au moins une partie de ces motifs alkyle contiennent une chaîne latérale alkylique de 1 à 5 atomes de carbone.

6. Composition de résine liquide durcissable selon l'une quelconque des revendications 1 à 5, dans laquelle le squelette polyéther du (méth)acrylate d'uréthane (a) est dérivé d'un polyol à base de polyéther (a-1) comprenant un motif structural montré par la formule suivante (1)
-CH₂CH (CₓH₂ₓ₊₁)- (1)
dans laquelle x est un nombre entier de 1 à 5.

7. Composition de résine liquide durcissable selon la revendication 6, dans laquelle x dans la formule (1) est soit 1 soit 2.

8. Composition de résine liquide durcissable selon l'une quelconque des revendications 6 à 7, dans laquelle le diol à base de polyéther (a-1) contient également une structure montrée par la formule suivante (2) 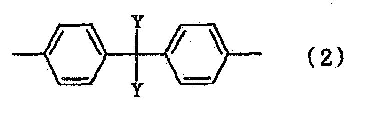 dans laquelle y représente un atome d'hydrogène ou un groupe méthyle.

9. Composition de résine liquide durcissable selon l'une quelconque des revendications 6 à 8, dans laquelle le diol à base de polyéther (a-1) contient également une structure alicyclique.

10. Composition de résine liquide durcissable selon l'une quelconque des revendications 1 à 9, qui est utilisée en tant que revêtement secondaire ou en tant que matériau matriciel de type ruban pour une fibre optique.

11. Procédé pour la production d'un produit durci comprenant l'irradiation de la composition de résine liquide durcissable selon l'une quelconque des revendications 1 à 9.

12. Fibre optique revêtue comprenant un revêtement primaire durci avec un module inférieur à 3 MPa à 23°C et un revêtement secondaire durci basé sur la composition de résine liquide durcissable selon l'une quelconque des revendications 1 à 9.
